# EUROPEAN PATENT SPECIFICATION

(11) **EP 3 047 961 B1**
(45) Date of publication and mention of the grant of the patent: **07.06.2017**
(21) Application number: 15382621.9
(22) Date of filing: 14.12.2015
(51) Int. Cl.: B29C 65/18, B26F 1/40, B65B 59/04, B65B 51/18, B29C 65/30, B29L 31/00

(54) **WELDING OR CUTTING UNIT FOR AN AUTOMATIC FLEXIBLE CONTAINER FORMING AND FILLING MACHINE**
SCHWEISS- ODER SCHNEIDEEINHEIT FÜR EINE AUTOMATISCHE FORM- UND FÜLLMASCHINE FÜR FLEXIBLE BEHÄLTER
UNITÉ DE SOUDAGE OU DE DÉCOUPAGE DESTINÉE À UNE MACHINE AUTOMATIQUE DE FORMAGE ET DE REMPLISSAGE DE RÉCIPIENT FLEXIBLE

(30) Priority: 20.01.2015 ES 201530063
(43) Date of publication of application: 27.07.2016
(73) Proprietor: Mespack, S.L., 08130 Santa Perpètua de Mogoda (Barcelona) (ES)
(72) Inventor: MORA FLORES, Francisco, 08100 Mollet del Vallès (ES); FITÉ SALA, Menna, 08130 Santa Perpètua de Mogoda (ES); MARTI ROCHE, Enric, 08950 Esplugues de Llobregat (ES)
(74) Representative: Juncosa Miro, Jaime

(56) References cited:
- WO-A1-01/17857

## Description

### Technical Field

The present invention generally relates to a welding or cutting unit for an automatic flexible container forming and filling machine, and more particularly to an extractable welding or cutting unit configured as a module in which cutting blades can be installed to act as a cutting unit, or thermal pressure rods can be installed to act as a welding unit, and said unit can be coupled to an automatic flexible container forming and filling machine or extracted therefrom to perform maintenance tasks on the welding or cutting unit and/or on the machine. Furthermore, one module can be replaced with another similar module for the duration of the maintenance tasks on the welding or cutting unit.

### Background of the Invention

Patent document EP 0999134 A2 discloses an automatic flexible container forming and filling machine comprising a web supply section supplying a web of thermoplastic sheet material from a reel, a container forming section forming individual flexible containers from the web of sheet material, and a filling section filling the individual flexible containers with one or more products, closing them and delivering them to an outfeed conveyor. The container forming section includes a folding unit, where the web of sheet material is folded longitudinally in a V shape to provide multiple overlapping layers, one or more welding units, where transverse welding lines are made, and one or more cutting units where the web of sheet material is cut transversely in connection with the welding lines to form the individual flexible containers. The web of sheet material is moved through the welding units and cutting units in a horizontal direction.

Patent document US 7067037 A1 describes an automatic flexible container forming and filling machine in which the web of sheet material is moved through the welding units and cutting units in a vertical direction. The web of sheet material is wound around a vertical supply tube supplying the material to be packaged, and a vertical welding unit joins two superimposed portions of web of sheet material on the supply tube by means of a longitudinal welding line. Below the supply tube, there are one or more welding units where transverse welding lines are made and one or more cutting units where the web of sheet material is cut transversely in connection with the transverse welding lines to form the individual flexible containers.

Automatic flexible container forming and filling machines are also known, similar to the one described in the mentioned document US 7067037 A1, in which the web of sheet material is cut longitudinally into two strips which are turned are superimposed on one another, instead of being wound around a supply tube, and where the two superimposed strips are joined by means of two longitudinal welding lines adjacent to the side edges thereof to provide the web of sheet material with multiple overlapping layers, which is moved in a vertical direction through one or more welding units, where transverse welding lines are made, and one or more cutting units where the web of sheet material is cut transversely in connection with the transverse welding lines to form the individual flexible containers.

In the different types of automatic flexible container forming and filling machines described above, each transverse welding unit and each cutting unit includes first and second mobile supports located on opposite sides of a passage through which the web of sheet material provided with multiple overlapping layers is moved step by step, and a drive mechanism converting rotary motion imparted by a motor into simultaneous and opposite back-and-forth motion of the first and second mobile supports. In the welding units the first and second mobile supports have fixed thereto first and second thermal pressure rods for welding the web of sheet material, and in the cutting units the first and second mobile supports have fixed thereto first and second cutting blades for cutting the web of sheet material. The welding operations and cutting operations are performed during intervals of the step-by-step movement in which the web of sheet material is stopped.

A drawback of welding units and cutting units in automatic flexible container forming and filling machines of the types described above is that they are integrated in the automatic flexible container forming and filling machine, and when maintenance tasks are to be performed on the welding or cutting units it is necessary to stop the machine and work on the welding or cutting units without extracting them from the machine or disassembling elements or parts of the welding or cutting units to repair or replace them while the machine is stopped, which involves a drop in machine productivity. Patent document WO01/17857 describes a zipper seal module that can be easily installed or removed but disclose neither a drive mechanism converting rotary motion imparted by a motor in a back and forth movement of the pressure rods nor that the driving mechanism can be automatically coupled to the motor.

### Disclosure of the invention

The present invention contributes to mitigating the aforementioned and other drawbacks by providing a welding or cutting unit for an automatic flexible container forming and filling machine comprising first and second mobile supports located on opposite sides of a passage through which there moves a web of thermoplastic sheet material provided with multiple overlapping layers to be welded and cut to form flexible containers in the automatic flexible container forming and filling machine, first and second thermal pressure rods or first and second cutting blades fixed to the first and second mobile supports, respectively, and a drive mechanism converting rotary motion imparted by a motor into simultaneous and opposite back-and-forth motion of the first and second mobile supports for welding the web of sheet material with the first and second thermal pressure rods or for cutting the web of sheet material with the first and second cutting blades.

In the welding or cutting unit of the present invention, the first and second mobile supports, carrying the first and second thermal pressure rods or the first and second cutting blades, and the drive mechanism, are installed in an extractable chassis defining the mentioned passage. The extractable chassis can be coupled in a sliding manner to guide supports fixed to a structure of the automatic flexible container forming and filling machine, such that the extractable chassis can be placed in a working position in the guide supports or extracted from the guide supports and separated from the structure of the machine. The drive mechanism has a driven coupling element installed in the extractable chassis in a position such that when the extractable chassis is placed in the mentioned working position, the driven coupling element is automatically coupled with a driving coupling element installed in the structure of the machine and operated by the motor.

Therefore, the extractable chassis of the welding or cutting unit, with the mobile supports, the thermal pressure rods or the cutting blades, and the drive mechanism installed therein, constitutes a module that can be placed in the machine in the working position or can be completely extracted and optionally replaced with another similar module by means of easy and rapid installation and extraction operations while the motor and the coupling element remain assembled in the structure of the machine.

This allows performing maintenance and/or repair tasks on the operative elements and of the drive mechanism of the welding or cutting unit, minimizing the periods of time in which the machine must remain stopped.

In one embodiment, the extractable chassis has guides assembled thereon perpendicular to the passage, or more specifically to the position of the web of sheet material in the passage, and the first and second mobile supports are coupled to these guides such that they can slide along same, maintaining positions parallel or approximately parallel to the passage.

The drive mechanism comprises a rotary drive shaft arranged perpendicular to the guides and connected to the driven coupling element by a motion transmission. In the drive shaft, first and second eccentric pins are fixed parallel to the drive shaft. In the first and second mobile supports, respective first and second transmission pins are fixed parallel to the first and second eccentric pins. A first connecting rod has one end connected to the first eccentric pin and the other end connected to the first transmission pin, and a second connecting rod has one end connected to the second eccentric pin and the other end connected to the second transmission pin.

Therefore, when the drive shaft is rotated by the motor in an alternating manner a predetermined angle in opposite directions, the first and second connecting rods convert the rotary motions of the drive shaft into simultaneous and opposite linear, back-and-forth motions of the first and second mobile supports and of the first and second thermal pressure rods or first and second cutting blades fixed to same along the guides.

By means of the simultaneous and opposite linear, back-and-forth motions, the first and second mobile supports alternate between an open position, in which the first and second thermal pressure rods or the first and second cutting blades are spaced from one another and separated from the passage, or more specifically from the position of the web of sheet material in the passage, and a closed position, in which the first and second thermal pressure rods or the first and second cutting blades are adjacent to another one and interfere with the passage, or more specifically with the position of the web of sheet material in the passage.

In one embodiment, the driven coupling element is installed in the extractable chassis in a position parallel to the drive shaft, and the motion transmission comprises a first pulley fixed coaxially to the driven coupling element, a second pulley fixed coaxially to the drive shaft and a transmission belt installed on said first and second pulleys. The driving coupling element is installed in the structure of the machine in a position coaxial with the driven coupling element.

The automatic flexible container forming and filling machine includes means for controlling the operation of the motor and eventually other elements of the welding or cutting unit of the present invention, preferably including an operative mode that is applied when the extractable chassis is installed in the working position in the structure of the machine, and an extraction mode that is applied when the extractable chassis is to be extracted from the structure of the machine, while the extractable chassis is extracted, and when the extractable chassis is to be installed again.

Preferably, the extractable chassis has a locking device locking the first and second mobile supports in the mentioned open position and keeps the driven coupling in an angular extraction position when the welding or cutting unit is in the extraction mode. The mentioned angular extraction position of the driven coupling corresponds with an angular standby position in which the motor keeps the driving coupling element in the extraction mode. Therefore, when the extractable chassis is installed again in the structure of the machine, sliding along the guide supports to the working position, the driven coupling will be automatically coupled with the driving coupling. Optionally, this locking device is operated automatically.

Also preferably, the welding or cutting unit comprises a fixing device whereby the extractable chassis is fixed to the structure of the automatic flexible container forming and filling machine when the extractable chassis is in said working position. Optionally, this fixing device is operated manually. Preferably, the extractable chassis has a handle on a front end thereof whereby the extractable chassis can be pulled for extraction thereof from the guide supports of the structure of the machine and transported.

Preferably, when the unit acts like a welding unit, the first and second thermal pressure rods are fixed rigidly to the corresponding first and second mobile supports at one and the same level and in positions parallel to one another and parallel to the passage, or more specifically to the position of the web of sheet material in the passage.

Preferably, when the unit acts like a cutting unit, the first cutting blade is fixed rigidly to the first mobile support in a substantially parallel or slightly inclined position with respect to the passage, or more specifically to the position of the web of sheet material in the passage, while the second cutting blade is installed in cantilever fashion in the second mobile support at a higher level and in a slightly inclined position with respect to the passage, or more specifically with respect to the position of the web of sheet material in the passage. To that end, the second cutting blade has an anchoring end fixed rigidly to an end of the second mobile support and a free end. This free end of the second cutting blade can optionally be in contact with an elastomer block fixed to the other end of the second mobile support opposite the anchoring end to absorb possible vibrations.

### Brief Description of the Drawings

The preceding and other features and advantages will be better understood from the following detailed description of a merely illustrative and non-limiting embodiment with reference to the attached drawings, in which:
Figure 1 is a perspective view of a welding or cutting unit for an automatic flexible container forming and filling machine according to an embodiment of the present invention, equipped with cutting blades and arranged in an open position;
Figure 2 is a perspective view of the welding or cutting unit of Figure 1 taken from a reverse angle;
Figure 3 is a top view of the welding or cutting unit of Figures 1 and 2;
Figure 4 is a cross-section view taken along plane IV-IV of Figure 3;
Figure 5 is a cross-section view similar to Figure 4, but arranged in a closed position;
Figure 6 is a cross-section view similar to Figure 4, but with the welding and cutting unit equipped with thermal pressure rods;
Figure 7 is a cross-section view taken along plane VII-VII of Figure 3;
Figure 8 is a cross-section view taken along plane VIII-VIII of Figure 3;
Figure 9 is a cross-section view taken along plane IX-IX of Figure 3;
Figure 10 is a cross-section view taken along plane X-X of Figure 3;
Figure 11 is a cross-section view taken along plane XI-XI of Figure 3;
Figure 12 is a schematic plan view of the welding and cutting unit extracted from a structure of the automatic flexible container forming and filling machine;
Figure 13 is a schematic plan view of the welding and cutting unit installed in a working position in the structure of the automatic flexible container forming and filling machine; and
Figure 14 is an enlarged detail of Figure 2 showing a driven coupling element of the welding and cutting unit.

### Detailed Description of an Embodiment

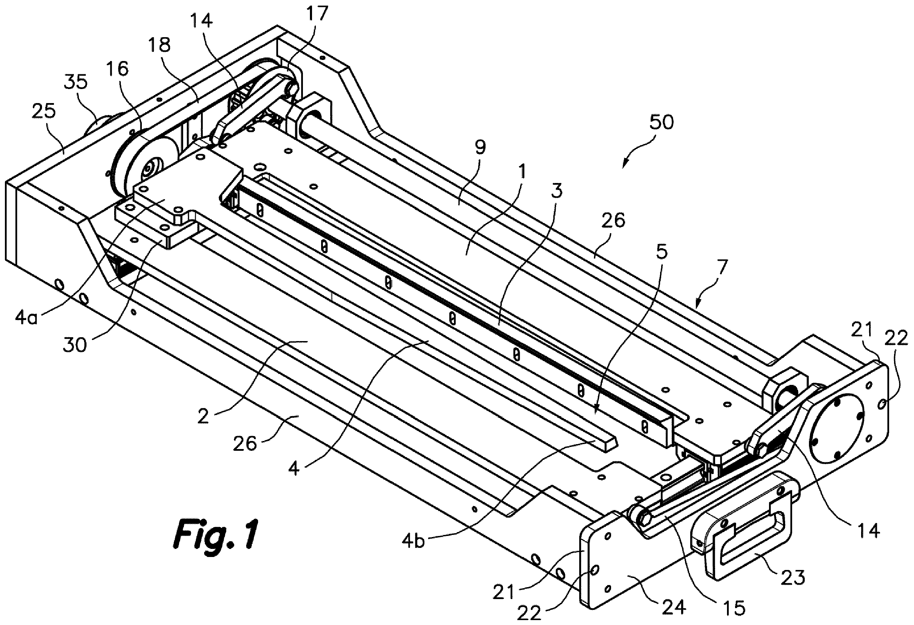

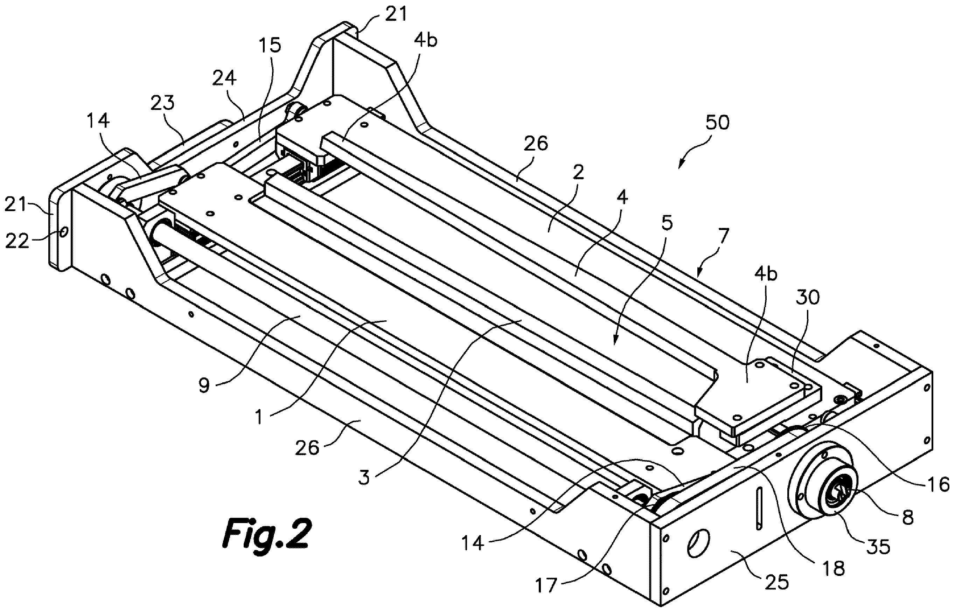

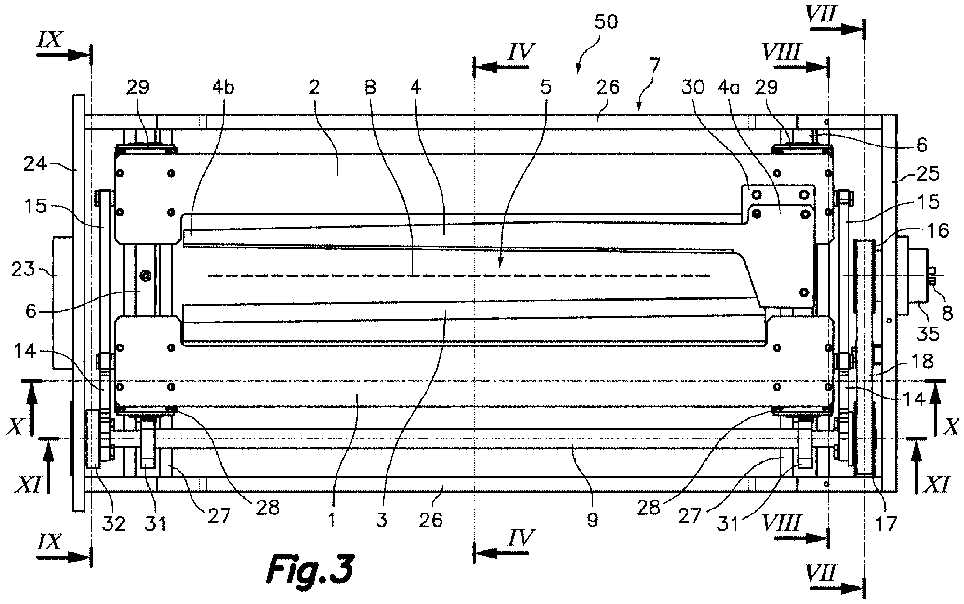

First in relation to Figures 1, 2 and 3, reference number 50 indicates a welding or cutting unit for an automatic flexible container forming and filling machine according to an embodiment of the present invention, comprising an extractable chassis 7 having a front wall 24, a rear wall 25 and two walls sides 26 therebetween defining a passage 5 through which, when the welding or cutting unit 100 is installed in a working position in a structure of the automatic flexible container forming and filling machine, there moves a web B of thermoplastic sheet material (Figure 3) provided with multiple overlapping layers. This web B will be welded and cut to form flexible containers.

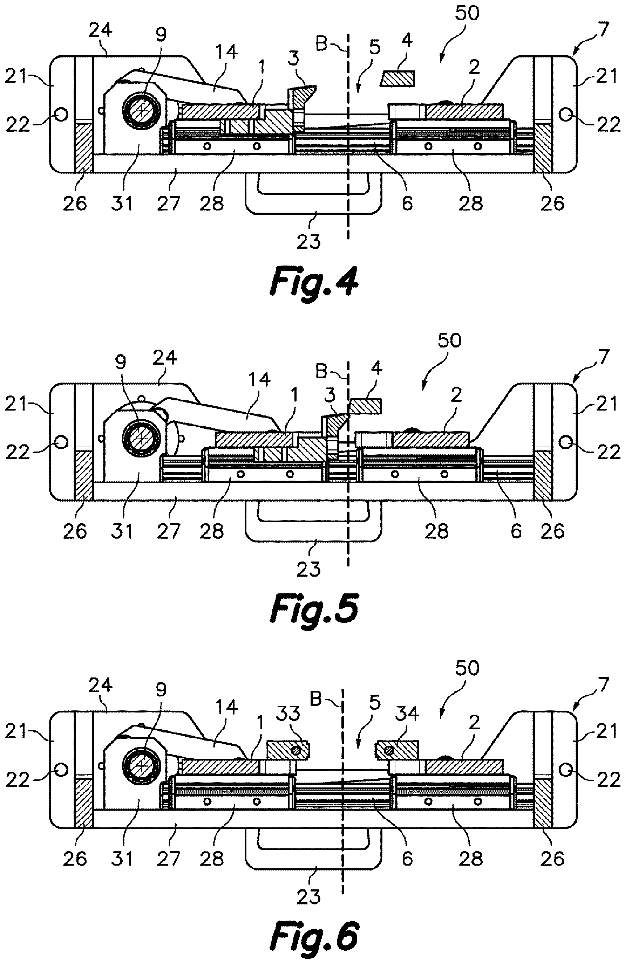

The extractable chassis 7 includes in regions close to the front and rear walls 24, 25 crosspieces 27 on which guides 6 are fixed perpendicular to the passage 5, or more specifically perpendicular to the position envisaged for the web B in the passage 5, and inside the extractable chassis 7 there are first and second mobile supports 1, 2 which are fixed to first and second slides 28, 29, respectively, coupled in a sliding manner to the guides 6. The Figures 4, 5, 6 and 10 best show the arrangement of the crosspieces 27, the guides 6, the first and second slides 28 and the first and second mobile supports 1, 2 fixed to same.

The first and second mobile supports 1, 2 are located on opposite sides of the passage 5. A first cutting blade 3 is fixed on the first mobile support 1, and a second cutting blade 4 is fixed on the second mobile support 2. The first and second cutting blades 3, 4 have respective cutting edges slightly inclined in diverging directions with respect to the position of the web B in the passage 5.

The first cutting blade 3 is fixed rigidly to the first mobile support 1 at a first level and the cutting edge thereof is on an upper front edge, and the second cutting blade 4 is installed in cantilever fashion in the second mobile support 2 at a second level superior higher than the first level, and the cutting edge thereof is on a lower front edge. To that end, the second cutting blade 4 has an anchoring end 2a fixed rigidly to an end of the second mobile support 2 by means of a shim 30 and a free end 4b opposite the anchoring end 4a.

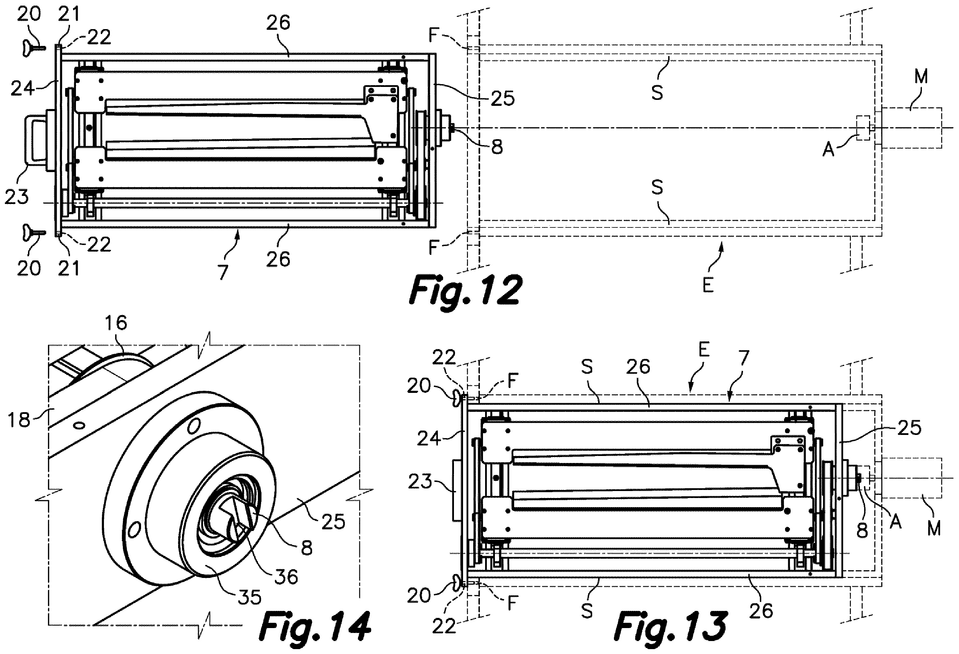

As best shown in Figures 4 and 5, the cutting edge of the first cutting blade 3 is flush with the cutting edge of the second cutting blade 4. Furthermore, there is installed in the extractable chassis 7 a drive mechanism converting rotary motion imparted by a motor M (Figures 13 and 14) into simultaneous and opposite back-and-forth motion of the first and second mobile supports 1, 2 along the guides 6 between an open position (Figure 4), in which the first and second cutting blades 3, 4 are spaced from one another and separated from the position of the web B in the passage 5, and a closed position (Figure 5), in which the first and second cutting blades are adjacent to one another and interfere with the web B in the passage 5 for transversely cutting the web B.

Alternatively, as shown in Figure 6, where the welding or cutting unit of the present invention acts like a welding unit, a first thermal pressure rod 33 is fixed on the first mobile support 1, and a second thermal pressure rod 34 is fixed on the second mobile support 2. The first and second thermal pressure rods 3, 4 are heated, for example by means of electric resistances, and have respective pressure surfaces parallel to the position of the web B in the passage 5 and located at one and the same level. When the first and second mobile supports 1, 2 are moved to the closed position, the first and second thermal pressure rods 3, 4 press against opposite sides of the web B while at the same time apply heat for transversely welding the web B.

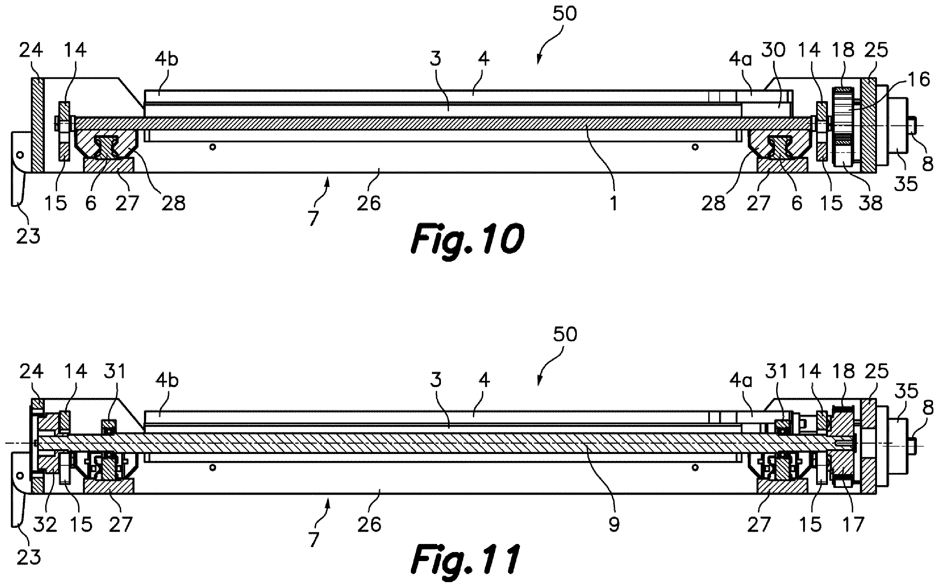

The drive mechanism comprises a drive shaft 9 perpendicular to the guides 6 supported in a rotary manner by bearings housed in bearing brackets 31 fixed to the crosspieces 27 (Figure 11). The drive shaft 9 extends along the extractable chassis 7. On an outer side of the rear wall 25 of the extractable chassis 7, there is a driven coupling element 8 supported by means of bearings housed in a bearing bracket 35 fixed to the rear wall 25 such that the driven coupling element 8 can rotate freely with respect to an axis parallel to the drive shaft 9.

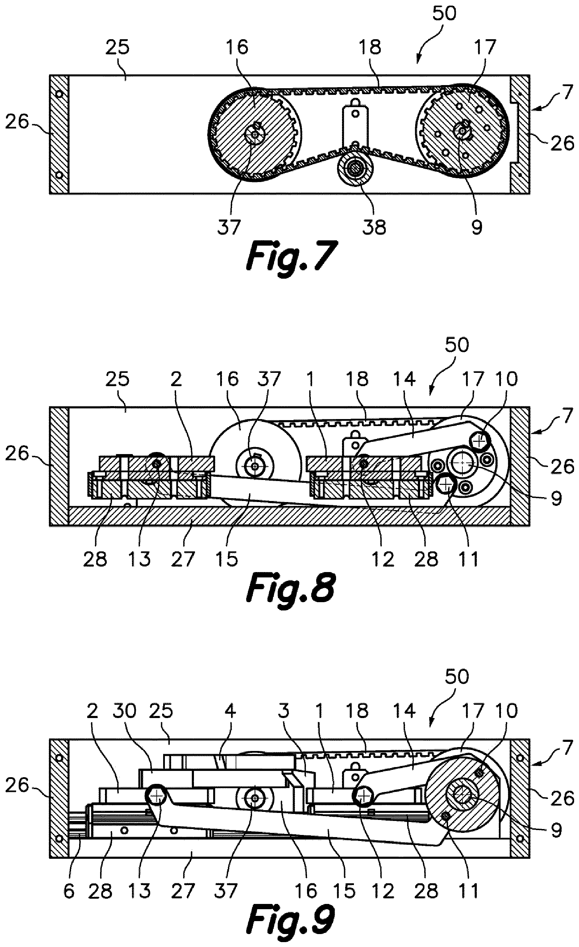

On the inner side of the rear wall 25 of the extractable chassis 7, there is a first pulley 16 fixed coaxially to the driven coupling element 8 by means of a shaft 37 (Figures 7, 8 and 9) and at one end of the drive shaft 9 adjacent to the rear wall 25 there is fixed a second pulley 17 coaxial with the drive shaft 9. A transmission belt 18 is installed on said first and second pulleys 16, 17 such that rotations of the driven coupling element 8 are transmitted to the drive shaft 9. On the inner side of the rear wall 25 of the extractable chassis 7, there is furthermore installed a tension pulley 38 (Figure 7) that presses against the transmission belt 18. The position of the tension pulley 38 is adjustable for adjusting the tension of the transmission belt 18.

First and second eccentric pins 10, 11 (best shown in Figure 8) are fixed in the second pulley 17 parallel to the drive shaft 9. At one end of the drive shaft 9 adjacent to the front wall 24 there is fixed an eccentric wheel 32 to which there are in turn fixed other first and second eccentric pins 10, 11 (best shown in Figure 9) coaxial to the first and second eccentric pins 10, 11 fixed to the second pulley 17, respectively. First transmission pins 12 coaxial with one another are fixed at both ends of the first mobile support 1, and second transmission pins 13 coaxial with one another are fixed at both ends of the second mobile support 2 (Figures 8 and 9).

The drive mechanism further comprises a pair of first connecting rods 14 and a pair of second connecting rods 15 (best shown in Figures 8 and 9). Each of the first connecting rods 14 has one end connected to one of the first eccentric pins 10 and the other end connected to one of the first transmission pins 12. Each of the second connecting rods 15 has one end connected to one of the second eccentric pins 11 and the other end connected to one of the second transmission pins 13.

Therefore, the first and second connecting rods 14, 15 convert alternating rotations in opposite directions of the drive shaft 9 into simultaneous and opposite linear, back-and-forth motions of the first and second mobile supports 1, 2 along the guides 6 and of the first and second cutting blades 3, 4 (Figures 1 to 5) or of the first and second thermal pressure rods 33, 34 (Figure 6) fixed to the first and second mobile supports 1, 2 to make consecutive cuts or welds in the web B.

Now in reference to Figures 12 and 13, the automatic flexible container forming and filling machine in which the welding or cutting unit of the present invention operates comprises a structure E in which guide supports S are fixed. In the structure E, there is a driving coupling element A installed in a position adjacent to an inner end of the guide supports S and a motor M that is operatively connected to rotate the driving coupling element A.

The front, rear and side walls 24, 25, 26 of the extractable chassis 7 have smooth outer and lower side surfaces which fit in a guided and sliding manner in guide supports S fixed to the structure E of the machine. When the extractable chassis 7 is coupled to the guide supports S, the driven coupling element 8 of the extractable chassis 7 is coaxially aligned with the driving coupling element A of the structure E.

Therefore, by sliding the extractable chassis 7 along the guide supports S into the structure E of the machine, the extractable chassis 7 can be placed in a working position (Figure 13) with respect to the structure E in which the driven coupling element 8 of the extractable chassis 7 is automatically coupled with the driving coupling element A of the structure E. Likewise, by sliding the extractable chassis 7 along the guide supports S out of the structure E of the machine, the extractable chassis 7 can be extracted from the guide supports S and separated from the structure E of the machine (Figure 12).

Figure 14 shows the driven coupling element 8 of the extractable chassis 7, which comprises a cylindrical protuberance having a diametric groove 36 conjugated with a diametric rib (not shown) provided in the driving coupling element A of the structure E, such that the driven coupling element 8 of the extractable chassis 7 and the driving coupling element A of the structure E can only be coupled to one another when both are in a predetermined relative angular position.

In the extractable chassis 7 there is arranged a locking device (not shown) locking the first and second mobile supports 1, 2 in an open position and keeping the driven coupling 8 in an angular extraction position when the welding or cutting unit is in an extraction mode, and this angular extraction position of the driven coupling 8 corresponds to an angular standby position in which the motor M maintains the driving coupling element A while the welding or cutting unit is in the extraction mode.

In one embodiment (not shown), the locking device comprises, for example, a locking element that is movable between a locking position and a release position, and a spring arranged to push the locking element towards the locking position. In the locking position, the locking element is inserted in a recess formed in one of the first and second mobile supports, immobilizing it. In the release position, the locking element is out of the mentioned recess allowing free movement of the drive mechanism. This locking element has a rod which projects from the rear wall 25 of the extractable chassis 7 in the locking position, and which interferes with the structure E of the machine when the extractable chassis 7 is placed in the working position and is pushed into the extractable chassis 7, moving the locking element to the release position against the force of the spring.

When the extractable chassis 7 is in said working position, the extractable chassis 7 is fixed to the structure E of the machine by means of locking screws 20 inserted in through holes 22 formed in extensions sides 21 of the front wall 24 of the extractable chassis 7 and screwed into threaded holes F existing in the structure E of the automatic flexible container forming and filling machine. The locking screws 20 have heads configured for being manually operated.

There is a collapsible handle 7 in the front wall 24 of the extractable chassis 7 whereby the extractable chassis 7 can be comfortably handled.

In the embodiment described in connection with Figures 1-14, the extractable chassis 7 is suitable for operating in a vertical automatic flexible container forming and filling machine, in which the web of sheet material with multiple overlapping layers is moved in a vertical direction through one or more welding units where transverse welding lines are made, and one or more cutting units where the web of sheet material is cut transversely in connection with the welding lines to form the individual flexible containers. Nevertheless, the welding or cutting unit of the present invention is also applicable to a horizontal automatic flexible container forming and filling machine, in which the web of sheet material with multiple overlapping layers is moved in a horizontal direction through one or more welding units and one or more cutting units, by means of slight modifications and/or adaptations that a person skilled in the art will readily think of.

Likewise, in the embodiment described in connection with Figures 1-14, the extractable chassis 7 is placed in a static working position in connection with the structure of the machine, the web of sheet material is moved step by step, and the welding or cutting operations are performed in the intervals of the step-by-step movement in which the web of sheet material is stopped. Nevertheless, in an alternative embodiment, the extractable chassis 7 is placed in a working position on a mobile carriage provided with forward and backward movements in connection with the structure of the machine, the web of sheet material is moved with continuous movement, and the welding or cutting operations are made during the forward and backward movements of the mobile carriage in which the extractable chassis 7 moves at the same speed as the web of sheet material.

The scope of the present invention is defined in the attached claims.

## Claims

1. A welding or cutting unit for an automatic flexible container forming and filling machine, comprising:
first and second mobile supports (1, 2) located on opposite sides of a passage (5) through which a web (B) of thermoplastic sheet material moves, said web (B) having multiple overlapping layers to be welded and cut to form flexible containers in the automatic flexible container forming and filling machine;
first and second thermal pressure rods (33, 34) or first and second cutting blades (3, 4) fixed to the first and second mobile supports (1, 2), respectively; and
a drive mechanism converting rotary motion imparted by a motor (M) in a back-and-forth, simultaneous and opposite movement of the first and second mobile supports (1, 2) for welding or cutting the web (B) with said first and second thermal pressure rods (33, 34) or with said first and second cutting blades (3, 4), respectively, wherein the first and second mobile supports (1, 2), the first and second thermal pressure rods (33, 34) or first and second cutting blades (3, 4), and said drive mechanism are installed in an extractable chassis (7) defining said passage (5);
said extractable chassis (7) is coupleable in a sliding manner to guide supports (S) fixed to a structure (E) of the automatic flexible container forming and filling machine and can be placed in a working position in said guide supports (S) or extracted from the guide supports (S); and
the drive mechanism has a driven coupling element (8) installed in the extractable chassis (7) which is automatically coupled, when the extractable chassis (7) is placed in said working position, with a driving coupling element (A) installed in said structure (E) of the automatic flexible container forming and filling machine and operated by said motor (M).

2. The welding or cutting unit according to claim 1, **characterized in that** the extractable chassis (7) has guides (6) assembled thereon perpendicular to the passage (5), and the first and second mobile supports (1, 2) are coupled in a sliding manner to said guides (6).

3. The welding or cutting unit according to claim 2, **characterized in that** said drive mechanism comprises a rotary drive shaft (9) arranged perpendicular to the guides (6) and connected to the driven coupling element (8) by a motion transmission, first and second eccentric pins (10, 11) parallel to said drive shaft (9) and fixed to the drive shaft (9), first and second transmission pins (12, 13) fixed to the first and second mobile supports (1, 2), respectively, a first connecting rod (14) having one end connected to said first eccentric pin (10) and the other end connected to said first transmission pin (12), and a second connecting rod (15) having one end connected to said second eccentric pin (11) and the other end connected to said second transmission pin (13).

4. The welding or cutting unit according to claim 3, **characterized in that** said motion transmission comprises a first pulley (16) fixed coaxially to the driven coupling element (8), a second pulley (17) fixed coaxially to the drive shaft (9) and a transmission belt (18) installed on said first and second pulleys (16, 17).

5. The welding or cutting unit according to claim 1, **characterized in that** the second cutting blade (4) is installed in cantilever fashion in the second mobile support (2) and has an anchoring end (4a) fixed to an end of the second mobile support (2) and a free end (4b).

6. The welding or cutting unit according to claim 1, **characterized in that** the extractable chassis (7) has a locking device which locks the first and second mobile supports (1, 2) in an open position and keeps the driven coupling (8) in an angular extraction position when the welding or cutting unit is in an extraction mode, said angular extraction position of the driven coupling (8) corresponding to an angular standby position in which the motor (M) keeps the driving coupling element (A) in said extraction mode.

7. The welding or cutting unit according to claim 1, **characterized in that** the extractable chassis (7) comprises a fixing device whereby the extractable chassis (7) is fixed to the structure (E) of the automatic flexible container forming and filling machine when the extractable chassis (7) is in said working position.

8. The welding or cutting unit according to claim 7, **characterized in that** said fixing device comprises locking screws (20) inserted in through holes (22) formed in extensions of the extractable chassis (7) and screwed into threaded holes existing in the structure (E) of the automatic flexible container forming and filling machine.

9. The welding or cutting unit according to claim 8, **characterized in that** said locking screws (20) have heads configured for being manually operated.

10. The welding or cutting unit according to claim 1, **characterized in that** the extractable chassis (7) has a handle (23) on a front end thereof.

## Patentansprüche

1. Schweiß- oder Schneideeinheit für eine automatische Form- und Füllmaschine für flexible Behälter, umfassend:
einen ersten beweglichen Träger (1) und einen zweiten beweglichen Träger (2), welche sich auf entgegengesetzten Seiten eines Durchgangs (5) befinden, durch welchen sich eine Bahn (B) aus thermoplastischem Bogenmaterial bewegt, wobei die genannte Bahn (B) mehrere zu schweißende und zu schneidende überlappende Schichten aufweist, um flexible Behälter in der automatischen Form- und Füllmaschine für flexible Behälter zu bilden;
eine erste thermische Druckstange (33) und eine zweite thermische Druckstange (34) oder eine erste Schneideklinge (3) und eine zweite Schneideklinge (4), welche jeweils an dem ersten beweglichen Träger (1) und dem zweiten beweglichen Träger (2) befestigt sind; und
einen Antriebsmechanismus, welcher eine von einem Motor (M) verliehene Drehbewegung in eine Hin- und Her-, gleichzeitige und entgegengesetzte Bewegung des ersten beweglichen Trägers (1) und des zweiten beweglichen Trägers (2) umwandelt, zum Schweißen oder Schneiden der Bahn (B) jeweils mit der genannten ersten thermischen Druckstange (33) und der genannten zweiten thermischen Druckstange (34) oder mit der genannten ersten Schneideklinge (3) und der genannten zweiten Schneideklinge (4),
wobei
der erste bewegliche Träger (1) und der zweite bewegliche Träger (2), die erste thermische Druckstange (33) und die zweite thermische Druckstange (34) oder die erste Schneideklinge (3) und die zweite Schneideklinge (4), und der genannte Antriebsmechanismus in einem ausziehbaren Gestell (7), welches den genannten Durchgang (5) definiert, installiert sind;
das genannte ausziehbare Gestell (7) in gleitender Weise gekoppelt werden kann, um Träger (S), welche an einer Struktur (E) der automatischen Form- und Füllmaschine für flexible Behälter befestigt sind, zu führen und in einer Arbeitsstellung in den genannten Führungsträgern (S) platziert werden kann oder aus den Führungsträgern (S) ausgezogen werden kann; und
der Antriebsmechanismus ein im ausziehbaren Gestell (7) installiertes, angetriebenes Kopplungselement (8) aufweist, welches automatisch gekoppelt wird, wenn das ausziehbare Gestell (7) in der genannten Arbeitsstellung platziert wird, mit einem antreibenden Kopplungselement (A), welches in der genannten Struktur (E) der automatischen Form- und Füllmaschine für flexible Behälter installiert ist und vom genannten Motor (M) betrieben wird.

2. Schweiß- oder Schneideeinheit nach Anspruch 1, **dadurch gekennzeichnet, dass** das ausziehbare Gestell (7) Führungen (6) aufweist, welche darauf senkrecht zum Durchgang (5) montiert sind, und der erste bewegliche Träger (1) und der zweite bewegliche Träger (2) in gleitender Weise mit den genannten Führungen (6) gekoppelt sind.

3. Schweiß- oder Schneideeinheit nach Anspruch 2, **dadurch gekennzeichnet, dass** der genannte Antriebsmechanismus eine drehbare Antriebswelle (9), welche senkrecht zu den Führungen (6) angeordnet ist und mit dem angetriebenen Kopplungselement (8) mittels einer Bewegungsübertragung verbunden ist, einen ersten Exzenterzapfen (10) und einen zweiten Exzenterzapfen (11), welche parallel zur genannten Antriebswelle (9) und an der Antriebswelle (9) befestigt sind, einen ersten Übertragungszapfen (12) und einen zweiten Übertragungszapfen (13), welche jeweils an dem ersten beweglichen Träger (1) und dem zweiten beweglichen Träger (2) befestigt sind, eine erste Kurbelstange (14), in welcher ein Ende mit dem genannten ersten Exzenterzapfen (10) verbunden ist und das andere Ende mit dem genannten ersten Übertragungszapfen (12) verbunden ist, und eine zweite Kurbelstange (15), in welcher ein Ende mit dem genannten zweiten Exzenterzapfen (11) verbunden ist und das andere Ende mit dem genannten zweiten Übertragungszapfen (13) verbunden ist, umfasst.

4. Schweiß- oder Schneideeinheit nach Anspruch 3, **dadurch gekennzeichnet, dass** die genannte Bewegungsübertragung eine erste Riemenscheibe (16), welche koaxial am angetriebenen Kopplungselement (8) befestigt ist, eine zweite Riemenscheibe (17), welche koaxial an der Antriebswelle (9) befestigt ist, und einen Treibriemen (18), welcher auf der genannten ersten Riemenscheibe (16) und der genannten zweiten Riemenscheibe (17) installiert ist, umfasst.

5. Schweiß- oder Schneideeinheit nach Anspruch 1, **dadurch gekennzeichnet, dass** die zweite Schneideklinge (4) auskragend im zweiten beweglichen Träger (2) installiert ist und ein Verankerungsende (4a), welches an einem Ende des zweiten beweglichen Trägers (2) befestigt ist, und ein freies Ende (4b), aufweist.

6. Schweiß- oder Schneideeinheit nach Anspruch 1, **dadurch gekennzeichnet, dass** das ausziehbare Gestell (7) eine Sperrvorrichtung aufweist, welche den ersten beweglichen Träger (1) und den zweiten beweglichen Träger (2) in einer offenen Stellung sperrt und die angetriebene Kopplung (8) in einer winkeligen Ausziehstellung hält, wenn sich die Schweiß- oder Schneideeinheit in einem Ausziehmodus befindet, wobei die genannte winkeligen Ausziehstellung der angetriebenen Kopplung (8) einer winkeligen Wartestellung entspricht, in welcher der Motor (M) das antreibende Kopplungselement (A) im genannten Ausziehmodus hält.

7. Schweiß- oder Schneideeinheit nach Anspruch 1, **dadurch gekennzeichnet, dass** das ausziehbare Gestell (7) eine Befestigungsvorrichtung umfasst, wodurch das ausziehbare Gestell (7) an der Struktur (E) der automatischen Form- und Füllmaschine für flexible Behälter befestigt ist, wenn sich das ausziehbare Gestell (7) in der genannten Arbeitsstellung befindet.

8. Schweiß- oder Schneideeinheit nach Anspruch 7, **dadurch gekennzeichnet, dass** die genannte Befestigungsvorrichtung Klemmschrauben (20) umfasst, welche in in Fortsätzen des ausziehbaren Gestells (7) gebildeten Durchgangsbohrungen (22) eingeführt sind und in Gewindebohrungen eingeschraubt sind, welche in der Struktur (E) der automatischen Form- und Füllmaschine für flexible Behälter vorhanden sind.

9. Schweiß- oder Schneideeinheit nach Anspruch 8, **dadurch gekennzeichnet, dass** die genannten Klemmschrauben (20) Köpfe aufweisen, welche dazu ausgebildet sind, manuell betätigt zu werden.

10. Schweiß- oder Schneideeinheit nach Anspruch 1, **dadurch gekennzeichnet, dass** das ausziehbare Gestell (7) auf einem Vorderende desselben einen Griff (23) aufweist.

## Revendications

1. Une unité de soudage ou de coupe pour une machine automatique formant et remplissant un récipient flexible comportant :
des premier et deuxième supports mobiles (1,2) situés sur des côtés opposés d'un passage (5) à travers lequel une bande (B) en matériau en feuilles thermoplastique se déplace, cette bande (B) ayant de multiples couches se chevauchant pour être soudées et coupées pour former des récipients flexibles dans la machine automatique formant et remplissant des récipients flexibles.
des première et deuxième tiges de pression thermiques (33, 34) ou des première et deuxième lames de coupe (3,4) fixées sur les premier et deuxième supports mobiles (1,2) respectivement ; et
un mécanisme d'entraînement convertissant le mouvement rotatif transmis par un moteur (M) en un mouvement de va-et-vient simultané et opposé des premier et deuxième supports mobiles (1,2) pour souder ou couper la bande (B) avec ces première et deuxième tiges de pression thermiques (33,34) ou avec ces première et deuxième lames de coupe (3,4), respectivement,
où
les premier et deuxième supports mobiles (1,2), les première et deuxième tiges de pression thermiques (33, 34) ou les première et deuxième lames de coupe (3, 4), et ce mécanisme d'entraînement sont installés dans un châssis extractible (7) définissant ce passage (5) ;
ce châssis extractible (7) peut être couplé coulissant à des supports de guidage (S) fixés sur une structure (E) de la machine automatique formant et remplissant un récipient flexible et il peut être placé en position de travail sur ces supports de guidage (S) ou bien extrais des supports de guidage (S) ; et
le mécanisme d'entraînement possède un élément de couplage entraîné (8) installé dans le châssis extractible (7) qui est automatiquement couplé, lorsque le châssis extractible (7) est placé dans cette position de travail, avec un élément de couplage entraînement (A) installé dans cette structure (E) de la machine automatique formant et remplissant un récipient flexible et actionné par ce moteur (M).

2. L'unité de soudage ou coupe conformément à la revendication 1, **caractérisée en ce que** le châssis extractible (7) possède des guides (6) qui y sont assemblées perpendiculaires au passage (5) et les premier et deuxième supports mobiles (1,2) sont couplés coulissants à ces guides (6).

3. L'unité de soudage et de coupe conformément à la revendication 2, **caractérisée en ce que** ce mécanisme d'entraînement comporte un arbre de transmission rotatif (9) agencé perpendiculaire aux guides (6) et relié à l'élément de couplage entraîné (8) par une transmission de mouvement, des première et deuxièmes goupilles excentriques (10,11) parallèles à cet arbre (9) et fixé à l'arbre de transmission (9), des première et deuxième goupilles de transmission (12, 13) fixées sur les premier et deuxième supports mobiles (1,2), respectivement, une première bielle (14) ayant une extrémité reliée à cette première goupille excentrique (10) et l'autre extrémité reliée à cette première broche de transmission (12) et une deuxième bielle (15) ayant une extrémité reliée à cette deuxième goupille excentrique (11) et l'autre extrémité reliée à cette deuxième broche de transmission (13).

4. L'unité de soudage ou de coupe conformément à la revendication 3, **caractérisée en ce que** cette transmission du mouvement comporte une première poulie (16) fixée coaxialement à un élément de couplage entraîné (8), une deuxième poulie (17) fixée coaxialement à l'arbre de transmission (9) et une courroie d'entraînement (18) installée sur ces première et deuxième poulies (16, 17).

5. L'unité de soudage ou de coupe conformément à la revendication 1, **caractérisée en ce que** la deuxième lame de coupe (4) est installée en porte à faux sur le deuxième support mobile (2) et elle possède une extrémité d'ancrage (4a) fixée sur une extrémité du deuxième support mobile (2) et une extrémité libre (4b).

6. L'unité de soudage ou de coupe conformément à la revendication 1, **caractérisée en ce que** le châssis extractible (7) possède un dispositif de verrouillage qui verrouille les premier et deuxième supports (1, 2) dans une position ouverte et maintient le couplage entraîné (8) dans une position d'extraction angulaire lorsque l'unité de soudage ou de coupe est dans un mode d'extraction, cette position d'extraction angulaire du couplage entraîné (8) correspondant à une position de réserve angulaire dans laquelle le moteur (M) maintient l'élément de couplage d'entraînement (A) dans ce mode d'extraction,.

7. L'unité de soudage ou de coupe conformément à la revendication 1, **caractérisée en ce que** le châssis extractible (7) comporte un dispositif de fixation par lequel le châssis extractible (7) est fixé sur la structure (E) de la machine automatique formant et remplissant un récipient flexible lorsque le châssis extractible (7) est dans cette position de travail.

8. L'unité de soudage ou de coupe conformément à la revendication 7, **caractérisée en ce que** ce dispositif de fixation comporte des vis de verrouillage (20) insérées dans des trous traversants (22) formés dans des extensions du châssis extractible (7) et vissées dans les trous traversants existant dans la structure (E) de la machine automatique formant et remplissant un récipient flexible.

9. L'unité de soudage ou de coupe conformément à la revendication 8, **caractérisée en ce que** ces vis de verrouillage (20) ont des têtes configurées pour être vissées manuellement.

10. L'unité de soudage ou de coupe conformément à la revendication 1, **caractérisée en ce que** la châssis extractible (7) à une poignée (23) sur son extrémité frontale.
